(19) Europäisches Patentamt
European Patent Office
Office européen des brevets

(11) **EP 2 275 984 A1**

(12) **EUROPEAN PATENT APPLICATION**

(43) Date of publication:
**19.01.2011 Bulletin 2011/03**

(51) Int Cl.:
***G06Q 30/00*** *(2006.01)*

(21) Application number: **09165790.8**

(22) Date of filing: **17.07.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **Axel Springer Digital TV Guide GmbH 10117 Berlin (DE)**

(72) Inventors:
• **Barbieri, Mauro**
  **5616 JX, Eindhoven (NL)**
• **Pronk, Verus**
  **5262 CN, Vught (NL)**

(74) Representative: **Eisenführ, Speiser & Partner Anna-Louisa-Karsch-Strasse 2 10178 Berlin (DE)**

(54) **Automatic information selection based on involvement classification**

(57)     The present invention relates to an automatic selection or placement engine that, given an ancillary information belonging to a certain category, places it in a congruent or contrasting context depending on the degree of involvement of the user in that product category. User profiles are automatically classified as low or high user involvement in a certain category.

Fig. 1

EP 2 275 984 A1

**Description**

FIELD OF THE INVENTION

The present invention relates to an apparatus, method, and computer program product for selecting an ancillary information, e.g. an advertisement, guidance information, assisting information, operating parameter information or the like, to be placed or inserted in a medium, e.g. radio, television (TV) channel, website or the like.

BACKGROUND OF THE INVENTION

In the present information society, knowledge is being leveraged from individual stage to community level at a pace never wondered before. Information, the precious raw material of the digital age, has never been so easy to obtain, process and disseminate through the Internet. Yet, with the huge amount of information presented to users, there is a rapidly increasing difficulty of finding out what users want, when they need it, and in a way that better satisfies their requirements. Recommender systems make a recommendation for a specific object or item by using evaluations for that object or item. They were introduced as computer-based intelligent systems to deal with the problem of information and product overload. Two basic entities of a recommender system are the user and the item. A user is a person who utilizes the recommender system providing his opinion about various items and receiving recommendations about new items from the recommender system. Typically goals of recommender systems are to generate suggestions about new items or to predict the utility of a specific item for a particular user. The output of a recommender system can be for example a prediction or a recommendation. A prediction is expressed as a numerical value, representing the anticipated opinion for a specific item. A recommendation can be expressed as a list of items which the active user is expected to like the most. Documents and user profiles may be represented using keyword vectors or lists for comparing and learning.

Nowadays, people spend less and less time watching television (TV) and increasingly more time browsing the Internet. Video content traditionally broadcast and watched on TV is now becoming widely available on the Internet. At the same time, new TV sets and set-top boxes are making Internet content accessible via TV sets. Moreover, Internet-enabled TV sets have been proposed, in which users are enabled to access Internet services and browse the Internet using a remote control and their TV set.

Hard-disk drives and digital video compression technologies have created the possibility of time-shifting live television and recording a large number of TV shows in high quality without having to worry about the availability of tapes or other removable storage media. At the same time, digitalization of audiovisual signals has multiplied the number of content sources for the average user. Hundreds of channels are available using for example a simple parabolic antenna and a digital receiver. More than hundred thousands of video clips are published daily on the Internet across various services, and all major content producers are already making their entire content libraries available online. Thousands of potentially interesting programs are broadcast and made available everyday and can be recorded and stored locally for later access.

Content aggregators, web services, software provides, etc. typically place or insert ancillary information, such as advertisement (ad) or guidance information, into their offered content. For example, TV broadcasters insert predetermined spaces into their TV content to provide ad space for (commercial) messages, e.g., in the form of graphical animated banners or sponsored links, or other types of message areas.

Given the fact that users are mostly interested in the service or content and do not want their experience to be disrupted by such (commercial) messages, technologies have been developed to make such ancillary information at least more acceptable by targeting them to each individual's behavior, preferences and, more importantly, to the context in which it is placed.

For example, keywords, domain names, topics, and demographic targets can be selected, and the ancillary information can be placed only on the websites and web pages containing content that is relevant for the target. Such an automatic targeted placement can be built on top of a recommender system which can be seen as a tool or mechanism for filtering out user-specific content to be brought to the attention of the user by estimating a degree of likeliness of a certain item for a certain user and automatically ranking content items. This can be done by comparing characteristics or features of content items with user profiles or user settings. The enhanced recommender system allows to place ancillary information in an optimized way based on actual viewing or accessing habits and preferences of individual users. At the same time, the viewer's experience is enriched by ancillary information which is tailored to a specific profile and is thus either relevant or entertaining.

Many factors influence the degree of attention of persons when exposed to ancillary information. These factors include the characteristics of the ancillary information itself, the characteristics of the person (e.g. viewer), the situation and/or environment of the person, the nature of the medium in which the ancillary information is inserted (radio, TV channel, website, etc.), the media context defined as the characteristics of the content in which the ancillary information is inserted.

SUMMARY OF THE INVENTION

An object of the present invention is to provide an improved mechanism for tailored selection of ancillary information to be inserted in a content.

This object is achieved by a system as claimed in claim 1, a method as claimed in claim 10 and a computer program product as claimed in claim 12.

Accordingly, an automatic selection and placement mechanism or engine is provided, that, given an ancillary information belonging to a certain product or content category, places it in the target context depending on the degree or classification of involvement of the user in that category. User profiles are automatically classified as low or high user involvement in a certain category, and the ancillary information is then inserted based on the classification. The proposed automatic placement can thus be based on product involvement classification and effectiveness of information placement can be greatly improved by embedding it in an appropriate media context. This is advantageous in that the total amount of ancillary information can be reduced, as it is selectively inserted based on the classified user involvement. Thereby, processing, storing and/or transmission capacity can be saved.

According to a first aspect, the ancillary information may be selected so as to place it either congruent or contrasting depending on the classification output of the classifier. Such a selection can ensure that the placement of the ancillary information is adapted to the user profile (e.g. habits and preferences of the user). If the ancillary information is a guidance information, its placement can be controlled so that user guidance is enhanced in content categories where user involvement has been little so far, while guidance is reduced in content categories with high user involvement. As another example, if the ancillary information is an ad, placement can be controlled to improve effectiveness of advertising by embedding the ad in an appropriate media context.

More specifically, the ancillary information can be selected so as to place it in a congruent context if the classification output of the classifier indicates a low-involvement user and in a contrasting context if said classification output of said classifier indicates a high-involvement user. Research has shown that for persons with low product category involvement, ads shown in a congruent media context lead to more positive attitude towards the ad and more ad content and brand recall than messages shown in a contrasting context. However, for persons with high product category involvement, ads shown in a congruent context lead to more negative attitude towards the ad and less ad content and brand recall than ads shown in a contrasting context. Thus, effectiveness of advertisements can be improved.

According to a second aspect which can be combined with the above first aspect, selection of the ancillary information may be prioritized depending on preferences of the user. Thereby, the proposed selection mechanism can be advantageously combined with a recommender mechanism to provide the user only with ancillary information which is related to a desired content.

According to a third aspect which can be combined with the at least one of the above first and second aspects, the selection may be performed under consideration of additional rules which relate to at least one of an origin of the ancillary information and a location where the ancillary information is to be placed in the content. Use of such additional rules can be advantageous in that the ancillary information is inserted in matching or desirable portions of the accessed content.

According to a fourth aspect which can be combined with any one of the above first to third aspects, the classification may be based on at least one of a content access history, a click history, and a rating history of the user. At least one of the above types of history are readily available in recommender systems, so that implementation of the proposed selection mechanism or engine does not require much modification and/or additional processing.

According to a fifth aspect which can be combined with any one of the above first to fourth aspects, the classification may be adapted to determine, for a number of categories, the number of times an ancillary information on the categories has been rated positive or negative, respectively, by the user, to determine total positive and negative counts summed over all categories, to estimate for each category a first conditional probability that the user likes a category and a second conditional probability that the user dislikes the category, and to classify the degree of involvement based on a required difference between the first and second conditional probabilities.

It is noted that the above selection mechanism or engine can be implemented based on at least one discrete hardware circuitry with discrete hardware components, at least one integrated chip, an arrangement of chip modules, or at least one signal processing device or computer device or chip controlled by a software routine or program stored in a memory.

BRIEF DESCRIPTION OF THE DRAWINGS

The invention will now be described, by way of example, based on embodiments with reference to the accompanying drawings, wherein:

Fig. 1 shows a schematic block diagram of an ad placement system according to a first embodiment; and

Fig. 2 shows a schematic flow diagram of processing steps involved in the proposed selection mechanism or engine according to the first embodiment.

## DESCRIPTION OF EMBODIMENTS

In the following a first embodiment is described based on an exemplary ad placement system. It is however noted that the present invention is not restricted to ad placement and can be implemented in any application where an ancillary, auxiliary or additional information is to be inserted in a content which is accessed (e.g. viewed, listened, read, etc.) by a user.

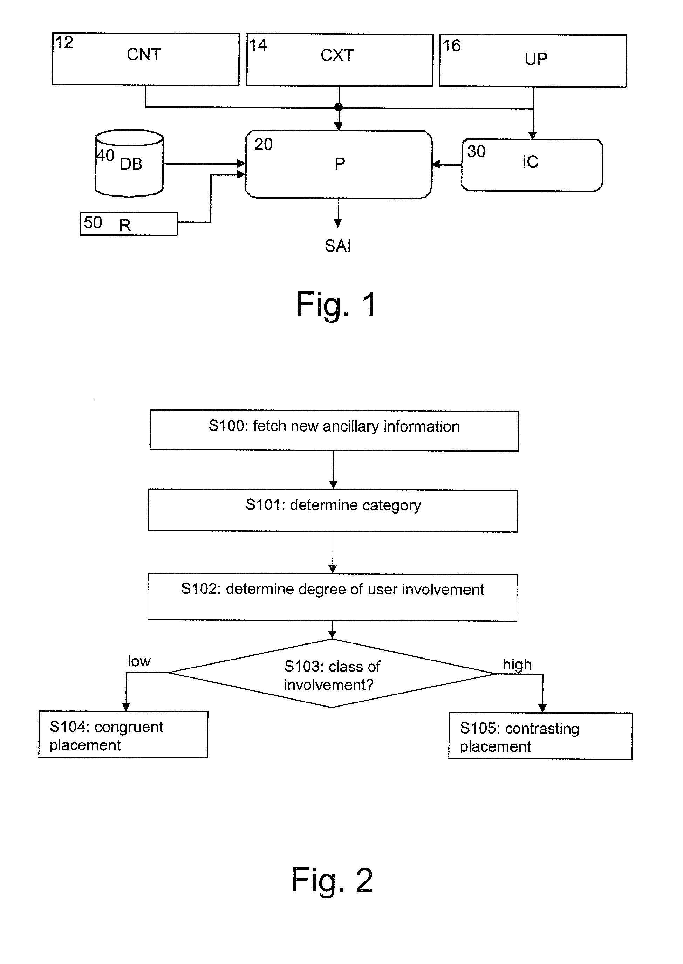

Fig. 1 shows a schematic block diagram of the ad placement system of the first embodiment. Given a certain piece of content (CNT) 12 (e.g. a webpage, a TV show, the schedule of a personal channel) and/or context (CXT) 14 (e.g. a query sent to a search engine), an ad placement mechanism, engine, or procedure (P) 20 selects one or more ads from a database (DB) 40 of ads that fit the content and a certain user profile (UP) 16 defmed by e.g. demographics, viewing history, purchasing history. The ad placement mechanism 20 outputs the selected ancillary information (SAI), which is an ad in the first embodiment, to be inserted in the concerned content portion.

The ad placement system matches features of the content (e.g. keywords extracted from a web page, or metadata associated to TV programs) against features of the ads to retrieve ads that fit well certain content. As an example, a textual content of a web page can be matched with keywords associated to ads to select ads that match the textual content of the page. Additionally, demographic information (at least location) could be used to further target the ads towards certain user groups.

Furthermore, the ad placement mechanism may for example be used for personal TV system to match metadata about TV programs with metadata about TV ads so as to select a pool of advertisements relevant for a particular personal channel. The ads may then be prioritized depending on user preferences (viewing behaviour and/or explicit preferences) and interleaved between the TV shows of the personal channel.

According to Fig. 1, the ad placement system may also takes into consideration additional rules (R) 50 (e.g. business rules) when selecting ads for certain content. These rules may prevent certain ads from being shown near certain content (e.g. an adult show trailer after a children TV show) or may try to maximize the providers' revenue by placing more often the ads of the highest bidding advertiser (when ads places are sold using a bidding system).

In the first embodiment, a selection mechanism or engine is implemented as an addition to an ad placement system as described above. To achieve this, a product category involvement classification (IC) is performed by a classifier 30. For each product category present in the ads database 40, the current user is classified as either low-involved or high-involved in that product category. The classification can be based for example on at least one of the user's viewing history, click history, rating history, and purchase history. As an example, a highly-involved user may be defined as a user who has viewed (and/or positively rated) a high number of ads of a given product category (relative e.g. to the average among a group of related users) or who has bought a relative high number of products, or clicked on a relative high number of ads of that category.

Depending on the user's involvement class (low or high), the ad can then be placed in a congruent or contrasting context.

The classifier 30 derives a lot of information about the user from the user profile 16, e.g., viewing/rating history on TV programs or a purchase history. Based on this user-specific information, it is calculated whether the user has high or low involvement in a given product category.

In the context of the first embodiment, where ads are being placed, there may also be derived user information concerning these ads, e.g. in terms of a rating/viewing history on ads. This information can be used to infer the user's involvement in a product category.

For example, as can be gathered from the exemplary Table 1 below, for a number $n$ of product categories, there may be listed the number of times an ad on these categories has been rated positive and negative, respectively, by the user, as well as total positive and negative counts, summed over all product categories.

| Product category | + ad rating counts | - ad rating counts | User's involvement |
|---|---|---|---|
| $C_1$ | $N(C_1, +)$ | $N(C_1, -)$ | $U(C_1)$ |
| $C_2$ | $N(C_2, +)$ | $N(C_2, -)$ | $U(C_2)$ |
| ... | ... | ... | ... |
| $C_n$ | $N(C_n, +)$ | $N(C_n, -)$ | $U(C_n)$ |
| Total counts | $N(+)$ | $N(-)$ | |

**Table 1: Example profile**

Based on the figures in this table, for each product category $C_i$, an estimate $U(C_i)$ of the degree of the user's involvement can be calculated as follows.

$$U(C_i) = \begin{cases} \text{High} & \text{if } \dfrac{N(C_i,+)}{N(+)} > k \cdot \dfrac{N(C_i,-)}{N(-)} \\ \text{Low} & \text{otherwise} \end{cases} \qquad (1)$$

where $k$ is a positive constant larger than 1. The background of equation 1 in this definition is that both ratios aim to estimate the conditional probability that the user likes and dislikes, respectively, product category $C_i$. The constant $k$ indicates the required difference between these two probabilities.

As an additional option, it is possible to incorporate a purchase history into equation 1 by combining the left hand side with the number $N(C_i, p)$ of products purchased in this category, e.g. by a convex combination, as follows.

$$U(C_i) = \begin{cases} \text{High} & \text{if } \alpha \cdot \dfrac{N(C_i,p)}{N(p)} + (1-\alpha) \cdot \dfrac{N(C_i,+)}{N(+)} > k \cdot \dfrac{N(C_i,-)}{N(-)} \\ \text{Low} & \text{otherwise} \end{cases} \qquad (2)$$

Here, N(p) indicates the total number of products purchased.

As a more specific example, an ad and a context (or piece of content) are considered and it is assumed that the ad obeys the business rules 50 and is liked by the user (in case there is an ad recommender present). Now, if the user has low involvement in the product category associated to the ad and the ad contrasts with the context, then it is not selected for possible placement. If, on the other hand, the ad is congruent with the context, it is selected for placement. Conversely, if the user has a high involvement in the product category associated to the ad and the ad contrasts with the context, then it is selected for possible placement. If, on the other hand, the ad is congruent with the context, it is not selected for placement. Whether the ad is eventually placed will generally depend on the complete set of ads to be considered, as well as other requirements, such as how often or how recent each of the ads has been inserted.

As another practical example, a case of placing ads in (or near to) a travel program (or travel channel, or a web page with information about travelling) is considered, where the ads database 40 includes an advertisement about "low cost flights".

For users who seldom buy flight tickets, and therefore have low involvement in the product category "flight tickets", the ad placement system should place the ad on "low cost flights" in the travel program (assuming a match between the metadata of the program and the metadata of the ad). While watching the travel program, the low-involved users should be stimulated by the context to pay attention to the related ad on flight tickets.

For users who habitually buy flight tickets, and therefore are highly involved with the product category "flight tickets", the ad placement system should not place the ad on "low cost flights" in the travel program, but it should either select a congruent ad with low involvement, or a contrasting ad with high involvement.

Consequently, ad selection and placement can be made adaptive to the individual user profile and the total number of ads to be processed and placed (per time unit) can be reduced to thereby save processing power and transmission or storage capacity for transferring and/or providing the ad-enriched content to the user.

Fig. 2 shows a schematic flow diagram of a generalized selection procedure according to a second embodiment.

In step S100, new ancillary information is fetched from a respective database where the ancillary information is stored. Then, in step S101, a category of the ancillary information as fetched for insertion into a content is determined, e.g. based on a corresponding indication of the ancillary information or the storage location in the database. Now, a degree of user involvement in the determined category is determined, calculated or estimated in step S102. The obtained degree of user involvement is classified in step S103 into the categories "low" involvement and "high" involvement. Of course, a higher number of categories (such as "low", "medium", and "high" or additionally "very low" and "very high") or other types of categories (such as "+", "0", and "-" or negative and/or positive numbers etc.) could be used as well. Then, more placement options could be provided.

In the present example of Fig. 2, two placement options are selected depending on the obtained classification categories "low" and "high". If step S103 decides on a category "low" involvement, then the concerned ancillary information is placed in a congruent manner (step S104). This can be implemented in a manner that the category of the ancillary information is congruent to the category of the content or in a manner that the ancillary information is congruent to the appearance or background of the content (i.e. less highlighted). Otherwise, if step S103 decides on a category "high" involvement, then the concerned ancillary information is placed in a contrasting manner (step S105). This can be implemented in a manner that the category of the ancillary information is contrasting to the category of the content or in a manner that the appearance of the ancillary information is contrasting to the appearance or background of the content (i.e. less highlighted).

As an example of the second embodiment, the ancillary information may be a guidance or guiding information helping the user to understand the operation of content delivery or the content itself. In case of a low involvement of the user in a category of the ancillary information, the user requires lots of guidance and is thus receptive and pays attention to the guidance. In contrast thereto, if the user involvement is high, the user does not pay much attention to guidance information, so that if guidance is determined to be necessary, it is inserted in a contrasting manner to attract the attention of the (experienced)) user. Thus, due to the classification of user involvement, the overall amount of guidance information can be reduced for more involved users, since only important guidance information is selected. Such an exemplary implementation can be used in various recommender-based or non-recommender-based content delivery systems, such as computer systems, TV systems, set-top boxes, audio systems, services (including Internet video, music services, web advertising), video systems, mobile or fixed communication systems, vehicle operating systems, maintenance systems etc. to thereby reduce processing, storing and/or transmission capacity.

In summary the present invention relates to a selection apparatus and method for an automatic selection or placement that, given an ancillary information belonging to a certain category, places it in a congruent or contrasting context depending on the degree of involvement of the user in that product category. User profiles are automatically classified as low or high user involvement in a certain category.

While the invention has been illustrated and described in detail in the drawings and the foregoing description, such illustration and description are to be considered illustrative or exemplary and not restrictive. The invention is not limited to the disclosed embodiments. From reading the present disclosure, other modifications will be apparent to persons skilled in the art. Such modifications may involve other features which are already known in the art and which may be used instead of or in addition to features already described herein.

Variations to the disclosed embodiments can be understood and effected by those skilled in the art, from a study of the drawings, the disclosure and the appended claims. In the claims, the word "comprising" does not exclude other elements or steps, and the indefinite article "a" or "an" does not exclude a plurality of elements or steps. A single processor or other unit may fulfill at least the functions of Figs. 1 and 2 based on corresponding software routines. The computer program may be stored/distributed on a suitable medium, such as an optical storage medium or a solid-state medium supplied together with or as part of other hardware, but may also be distributed in other forms, such as via the Internet or other wired or wireless telecommunication systems. The mere fact that certain measures are recited in mutually different dependent claims does not indicate that a combination of these measures cannot be used to advantage. Any reference signs in the claims should not be construed as limiting the scope thereof.

**Claims**

1. An apparatus for selecting an ancillary information to be inserted to a content accessed by a user, the apparatus comprising:

   - a classifier for calculating based on a provided user-specific information an involvement of said user in a category of said ancillary information, and for classifying said calculated involvement; and
   - a selector for selecting said ancillary information based on a classification output of said classifier.

2. The apparatus according to claim 1, wherein said selector is adapted to select said ancillary information so as to place it either in a congruent context or in contrasting context depending on said classification output of said classifier.

3. The apparatus according to claim 2, wherein said selector is adapted to select said ancillary information so as to place it in said congruent context if said classification output of said classifier indicates a low-involvement user and in said contrasting context if said classification output of said classifier indicates a high-involvement user.

4. The apparatus according to any one of the preceding claims, wherein said selector is configured to prioritize said ancillary information depending on preferences of said user.

**5.** The apparatus according to any one of the preceding claims, wherein said selector is configured to perform said selection under consideration of additional rules which relate to at least one of an origin of the ancillary information and a location where the ancillary information is to be placed in said content.

**6.** The apparatus according to any one of the preceding claims, wherein said classifier is adapted to base the classification on at least one of a content access history, a click history, and a rating history of said user.

**7.** The apparatus according to any one of the preceding claims, wherein said classifier is adapted to determine, for a number of categories, the number of times an ancillary information on said categories has been rated positive or negative, respectively, by said user, to determine total positive and negative counts summed over all categories, to estimate for each category a first conditional probability that said user likes a category and a second conditional probability that said user dislikes the category, and to classify said degree of involvement based on a required difference between said first and second conditional probabilities.

**8.** The apparatus according to any one of the preceding claims, wherein said ancillary information is an advertisement and said category is a product category of said advertisement.

**9.** The apparatus according to any one of claims 1 to 7, wherein said ancillary information is a guidance information and said category is a content category to which said guidance information relates.

**10.** A method of selecting an ancillary information to be inserted to a content accessed by a user, said method comprising:

- calculating based on a provided user-specific information an involvement of said user in a category of said ancillary information;
- classifying said calculated degree of involvement; and
- selecting said ancillary information based on the result of the classification.

**11.** The method according to claim 10, wherein said ancillary information is selected so as to place it either in a congruent context or in contrasting context depending on said result of classification.

**12.** A computer program product comprising code means for producing the steps of method claim 10 or 11 when run on a computing device.

Fig. 1

Fig. 2

Europäisches
Patentamt

European
Patent Office

Office européen
des brevets

**EUROPEAN SEARCH REPORT**

Application Number

EP 09 16 5790

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | The claimed subject matter, with due regard to the description and drawings, relates to processes comprised in the list of subject matter and activities excluded from patentability under Art.52(2) and (3) EPC. The applicant is advised that in accordance with the established practice of the EPO, no search need be performed in respect of those aspects of the claimed invention.<br>The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present application. The notoriety of such prior art cannot reasonably be contested. No documentary evidence was therefore considered required.<br>For further details see the Notice from the European Patent Office dated 1 October 2007 (OJ 11/ 2007, p. 592 f) and the accompanying Opinion.<br>----- | 1-12 | INV.<br>G06Q30/00 |
| | | | TECHNICAL FIELDS SEARCHED (IPC) |
| | | | G06Q |

The present search report has been drawn up for all claims

| Place of search | Date of completion of the search | Examiner |
|---|---|---|
| Munich | 15 February 2010 | Hopper, Eva |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
...................................................................................................
& : member of the same patent family, corresponding
   document

EPO FORM 1503 03.82 (P04C01)